# FASCICULE DE BREVET EUROPEEN

(11) **EP 2 892 363 B1**
(45) Date de publication et mention de la délivrance du brevet: **09.11.2016**
(21) Numéro de dépôt: 13765530.4
(22) Date de dépôt: 06.09.2013
(51) Int. Cl.: A23G 1/00, A23G 1/52

(54) **PRODUIT ALIMENTAIRE, TEL QUE LE CHOCOLAT, COMPRENANT DE LA MATIÈRE GRASSE ET DES MICROBULLES DE GAZ POUR LIMITER L'EXSUDATION ET LE BLANCHIMENT GRAS**
NAHRUNGSMITTELPRODUKT WIE SCHOKOLADE MIT FETT UND LUFTMIKROGASBLÄSCHEN ZUR BEGRENZUNG VON EXSUDATION UND FETTREIF
FOOD PRODUCT, SUCH AS CHOCOLATE, COMPRISING FAT AND GAS MICROBUBBLES IN ORDER TO LIMIT EXUDATION AND FAT BLOOM

(30) Priorité: 07.09.2012 FR 1258374
(43) Date de publication de la demande: 15.07.2015
(73) Titulaire: Barry Callebaut AG, 8005 Zürich (CH)
(72) Inventeur: SNABRE, Patrick, 33170 Gradignan (FR); HABOUZIT, Damien, 17000 La Rochelle (FR); LANDUYT, Alex, 9280 Lebbeke-Wieze (BE); DEPYPERE, Frédéric, 9280 Lebbeke-Wieze (BE); LOPEZ, Michel, 78250 Meulan (FR); KERSTEN,Roland, 78250 Meulan (FR)
(74) Mandataire: McDade, Sophie V.G.A.
(86) Numéro de dépôt international: PCT/IB2013/058341
(87) Numéro de publication internationale: WO 2014/037910

(56) Documents cités:
- EP-A1- 0 730 826
- WO-A1-2004/056191
- US-A- 5 230 919
- J. HAEDELT ET AL: "Bubble-Included Chocolate: Relating Structure with Sensory Response", JOURNAL OF FOOD SCIENCE, vol. 72, no. 3, avril 2007 (2007-04), pages E138-E142, XP055015547, ISSN: 0022-1147, DOI: 10.1111/j.1750-3841.2007.00313.x
- C. LOISEL ET AL: "Fat Bloom and Chocolate Structure Studied by Mercury Porosimetry", JOURNAL OF FOOD SCIENCE, vol. 62, no. 4, juillet 1997 (1997-07), pages 781-788, XP055063331, ISSN: 0022-1147, DOI: 10.1111/j.1365-2621.1997.tb15455.x

## Description

La présente invention concerne le domaine technique de la migration des huiles et du blanchiment gras des produits alimentaires comprenant au moins une matière grasse, notamment le beurre de cacao ou des matières grasses équivalentes (CBE).

La matière grasse végétale ou animale est majoritairement constituée de matières grasses telles que des triglycérides. Selon la température et le passé thermique, les triglycérides se présentent sous différents états d'organisation ou formes cristallines (ou variétés cristallines). La température de fusion augmente avec le degré d'organisation et la densité de la forme cristalline. Ainsi, la forme y la moins dense fond entre -5°C et 5°C, la forme α de structure hexagonale entre 17°C et 20°C, les formes β'III et β'IV de symétrie orthorhombique entre 20°C et 27°C. Les formes β les plus denses correspondent à un réseau triclinique et fondent entre 28°C et 32°C pour la forme βV et entre 32°C et 37°C pour la forme βVI. L'organisation des triglycérides évolue plus ou moins lentement vers les formes β les plus stables selon le passé thermique et la température.

Les évolutions de l'organisation de matières grasses telles que des triglycérides se retrouvent également dans les matériaux qui en comprennent, notamment, dans le beurre de cacao et le chocolat. En effet, le beurre de cacao est constitué en majorité de triglycérides, formant environ 97% en masse totale de beurre de cacao. Les recettes de chocolat comprennent généralement de 20% à 40% en masse de beurre de cacao, de CBE ou de pâte de cacao.

Le chocolat est produit alimentaire est constitué du mélange, dans des proportions variables, de pâte de cacao, de beurre de cacao et de sucre ; on y ajoute éventuellement d'autres composants et notamment des épices, comme la vanille, ou des matières grasses végétales. La composition du chocolat est définie par exemple par la directive européenne 2000/36/CE du 23 juin 2000.

Lors de sa préparation, le chocolat à l'état liquide subit une étape de tempérage, en vue de diriger la cristallisation du beurre de cacao vers la forme βV parmi les six états cristallins précités, pour obtenir une structure cristalline relativement stable qui fond en bouche entre 28°C et 32°C.

Après la fonte du chocolat au-delà de 40 °C, puis la formation des premiers germes cristallins lors du refroidissement, le tempérage consiste à réchauffer de manière contrôlée le chocolat liquide pour fondre les germes instables et conserver les germes stables βV en vue de provoquer une cristallisation sous la forme stable βV lors du refroidissement du chocolat. Un ensemencement du chocolat fondu avec des germes βV (poudre de beurre de cacao Mycryo™) permet aussi d'initier la cristallisation du chocolat sous la forme βV.

Toutefois, la forme βV évolue plus ou moins rapidement vers la forme la plus stable βVI ce qui contribue à dégrader la surface et la brillance du matériau (phénomène de blanchiment gras) mais augmente aussi la température de fonte du chocolat. La conservation du produit au-dessus de 20°C et les variations de température accélèrent donc la réorganisation des triglycérides vers la forme la plus stable βVI. Les produits alimentaires solides à base de beurre de cacao doivent être conservés entre 12°C et 18°C en vue de ralentir la réorganisation des matières grasses du chocolat et l'apparition du blanchiment gras à la surface du produit.

Une augmentation de la température au-dessus de 20°C due à un mauvais conditionnement, à un accident thermique durant le transport, ou bien simplement au contact avec la peau, etc., crée un surplus de mobilité interne ce qui accélère la réorganisation des triglycérides et provoque un endommagement du produit solide. En effet, le produit solide se ramollit considérablement suite à un réchauffement au-dessus de 20°C et on peut observer, à la surface du produit, la formation de petites gouttes de diamètre compris entre 20μm et 100μm. Les gouttelettes se retirent ensuite dans un temps compris entre quelques minutes et quelques dizaines de minutes selon la température comprise entre 20°C et 30°C pour laisser la place à des auréoles blanches caractéristiques du blanchiment gras à la surface du produit. La croissance de germes βVI dans la phase liquide, puis le dépôt des germes βVI sur la surface du produit lors du retrait du liquide, expliquent la formation des auréoles blanches et du blanchiment gras. Les effets d'exsudation dépendent donc surtout de la quantité de matière grasse susceptible de fondre lors du chauffage.

Les produits alimentaires solides à base de matière grasse présentent une structure hétérogène constituée par un mélange de micro domaines liquides et de microcristaux plus ou moins stables selon la forme cristalline. Lors du chauffage au-dessus de 20°C ou de variations de la température de conservation au-dessus de 18°C, la fonte des microcristaux instables et la dilatation des micro-domaines liquides provoquent une surpression interne dans la phase liquide et des microfissures se propagent alors dans le matériau. Les microfissures permettent la remontée des huiles à la surface et la formation de gouttelettes à la surface du produit. Un processus de recristallisation provoque ensuite une réorganisation de la phase liquide vers les formes cristallines plus denses βV et βVI, avec pour conséquence, le dépôt de germes cristallins à la surface du produit lors du retrait des gouttelettes, et l'apparition du blanchiment gras ce qui dégrade la brillance du produit et altère le caractère fondant en bouche du produit.

Pour lutter contre le blanchiment gras du chocolat, quelques solutions ont été envisagées, notamment, l'ajout d'un dialcool alkyle, alcènyle ou aromatique ayant des chaines carbonées de 4 à 22 atomes de carbone comme décrit dans le document WO 91/14376. Malgré le développement de cette technique le chocolat reste sensible aux variations de température et le blanchiment gras continu de se développer.

Le document WO 2004/056191 décrit un produit de confiserie ayant un chocolat aéré ou de faible densité au centre entouré par un enrobage en sucre. Ce document décrit des chocolats enrobés de faible densité.

Le document US5230919 décrit un produit alimentaire à base de matière grasse sous la forme de micro-domaines cristallins et non-cristallins (beurre de cacahuète aéré) comprenant une fraction volumique de 5% à 30% de gaz les dites micro-bulles ayant un diamètre de moins de 150 μm.

J. HAEDELT ET AL. ("Bubble-Included Chocolate: Relating Structure with Sensory Response",JOURNAL OF FOOD SCIENCE, vol. 72, no. 3, avril 2007) décrivent un procédé d'aération d'un chocolat, ledit chocolat étant obtenu en dispersant une fraction volumique de 29 à 68% des micro-bulles de gaz d'un diamètre allant de 130 à 510 microns. C. LOISEL ET AL ("Fat Bloom and Chocolate Structure Studied by Mercury Porosimetry",JOURNAL OF FOOD SCIENCE, vol. 62, no. 4, juillet 1997) démontrent que des micro-bulles existent naturellement dans le chocolat. En revanche, le volume occupé par ces bulles est inférieur à 0.1 % même si la porosité est elle de 1%.

Le document EP0730826 concerne un procédé d'aération du chocolat, par dispersion de micro-bulles de gaz ayant un diamètre de 5 μm. En revanche, la méthode comprend ensuite une étape dans lequel le chocolat est broyé puis désaéré sous vide.

Il existe donc un besoin en un produit alimentaire à base de matière grasse, ayant une meilleure stabilité thermique, une moindre exsudation et/ou un blanchiment gras limité ou nul, et ceci en ne modifiant pas les propriétés mécaniques du produit et ses caractéristiques de texture et de goût.

A cet effet, l'invention a pour objet un produit alimentaire à base de matière grasse sous la forme de micro-domaines cristallins et non cristallins, caractérisé en ce que ledit produit comprend une fraction volumique de 0,1% à 5,0% de microbulles de gaz de diamètre allant de 1 μm à 100 μm. La nature du gaz (air, gaz carbonique, azote, argon, hélium, oxyde nitreux,...) n'influe pas sur l'invention.

L'invention a pour but de limiter l'apparition du blanchiment gras à la surface d'un produit alimentaire comprenant de la matière grasse, particulièrement de la matière grasse d'origine végétale c'est-à-dire qui contient majoritairement des triglycérides, telle que du beurre de cacao ou des graisses équivalentes au beurre de cacao (CBE). Ces graisses équivalentes sont par exemple des graisses végétales non lauriques, des graisses à base de beurre de karité, de la matière grasse de lait anhydre (MGLA) ou un mélange de ces matières grasses. Par « matière grasse de lait anhydre », on entend une matière grasse de lait obtenue après écrémage par des procédés assurant l'extraction quasi totale de l'eau et de l'extrait sec non gras. Avantageusement ce produit répond à la norme *68A* de la Fédération *Internationale* de Laiterie et est obtenu exclusivement à partir de lait de vache, de crème ou de beurre.

L'ajout de ces microbulles de gaz de faible dimension dans la matrice permet la relaxation locale des surpressions internes lors du chauffage ou de fluctuations de la température de conservation du produit et empêche ainsi la prolifération à grande échelle, de microfissures dans la phase solide qui conduisent à une exsudation de surface sous la forme de petites gouttes liquides et au blanchiment gras.

Les microbulles de gaz augmentent la capacité du matériau à subir des déformations sans endommagement à grande échelle et accélèrent les processus de recristallisation lors du chauffage ou de variations de la température de conservation du produit alimentaire à base de matière grasse.

La présence de microbulles de gaz stabilise ainsi la microstructure et diminue fortement voire élimine complétement du point de vue visuel la migration des huiles vers la surface et le blanchiment gras lors du chauffage du produit alimentaire solide, par exemple entre 20°C et 30°C, ou de variations de la température de conservation par exemple au dessus de 18°C. La présence de microbulles permet donc d'obtenir un chocolat d'aspect et de texture conventionel présentant des caractéristiques améliorées, notament du point de vue visuel. Plus particulièrement un chocolat selon l'invention ne requière pas la présence d'un enrobage, tel qu'un enrobage en sucre, entourant, en tout ou partie (par exemple, à plus de 50% de sa surface), le produit alimentaire.

Bien que particulièrement adapté à des produits alimentaires à base de beurre de cacao (par exemple chocolat ; produit chocolatés etc..), l'invention s'applique également à une large gamme de matériaux qui contiennent de la matière grasse, particulièrement de la matière grasse sous forme majoritaire de triglycérides.

La quantité de matière grasse peut être comprise entre 25% et 100% en poids, plus particulièrement entre 30% et 100% en poids. En effet, le produit alimentaire peut-être constitué d'une matière grasse, telle que du beurre de cacao ou de cacahuète, ou d'un produit contenant de telles matières grasses, tel que du chocolat, ou des confiseries ou des pâtisseries.

Avantageusement, les microbulles de gaz présentent une taille inférieure ou égale à 100μm de diamètre. Le diamètre de ces microbulles peut aller de 1μm à 100μm de diamètre, préférentiellement de 1 μm à 30 μm de diamètre, et de façon encore plus préférée de 1μm à 10μm de diamètre.

Avantageusement l'invention porte sur un produit alimentaire ayant une densité allant de 1,10g/ml à 1,5g/ml, particulièrement de 1,20g/ml à 1,35g/ml et plus particulièrement de 1,26g/ml à 1,30g/ml.

De préférence le produit alimentaire selon l'invention présente une densité similaire ou légèrement inférieure à celui d'un chocolat standard. Une telle densité d'un produit alimentaire selon l'invention est généralement supérieure à 1,25 g/ml et plus particulièrement supérieure ou égale à 1,28 g/ml. Par exemple la densité du produit alimentaire peut être de 1,28 à 1,31 g/ml. La densité est mesurée dans des conditions standards ; c'est-à-dire sous pression atmosphérique normale (1 013 hPa) à 20°C.

Lorsque le produit alimentaire est constitué en majeure partie de matière grasse, la densité peut-être plus faible. Cependant elle est généralement supérieure à 0,9 g/ml

De préférence la fraction volumique des microbulles de gaz est supérieure ou égale à 0,2% et plus particulièrement supérieure ou égale à 0,5% ou à 0,8%.

De préférence la fraction volumique des microbulles de gaz est inférieure ou égale à 5,0%, plus particulièrement inférieure ou égale à 4,5% ou encore à 4%.

Avantageusement la fraction volumique des microbulles de gaz est inférieure ou égale à 3,5% ou à 3,0%, plus particulièrement inférieure ou égale à 2,8% ou à 2,0%.

De préférence la fraction volumique des microbulles de gaz est choisie dans la gamme allant de 0,2% et 4,5%, avantageusement dans la gamme allant de 0,3% à 2,5%. Alternativement la fraction volumique des microbulles de gaz peut être choisie dans la gamme comprise entre 0,5% et 2%.

De préférence le produit alimentaire est un composé solide ou pâteux mais non liquide. Il est également préféré que le produit contienne très peu d'eau, par exemple moins de 5%, et de préférence moins de 1%, en poids. Enfin de manière particulièrement préféré le produit alimentaire est un chocolat, par exemple un chocolat moulé ou un chocolat enrobé. Le produit alimentaire peut également comprendre tout ou partie d'autres graisses équivalentes au beurre de cacao telles que celles décrites précédemment.

Avantageusement, le produit alimentaire enrichi en microbulles de gaz présente une réduction observable du phénomène d'exsudation par rapport à un produit alimentaire de même composition, d'au moins 80% à 100% pour une température comprise entre 20°C et 27°C, et d'au moins 50% à 80% pour une température comprise entre 27°C et 30°C.

L'invention a pour objet un procédé de préparation d'un produit alimentaire tel que décrit ci-dessus à base de matière grasse sous forme de micro-domaines cristallins et non cristallins, dans lequel on forme une composition liquide ou visqueuse comprenant la matière grasse, caractérisé en ce qu'on disperse dans la composition une fraction volumique de 0,1 % à 5,0 % de microbulles de gaz de diamètre allant de 1 μm à 100 μm.

La fraction volumique des bulles dispersées ainsi que ainsi que leurs tailles peuvent varier dans les limites du produit selon l'invention.

Selon un mode préféré de l'invention, l'ensemencement des microbulles se fait par des moyens mécaniques, en particulier des moyens mécaniques d'agitation du produit sous une forme liquide. Par exemple, ces moyens mécaniques comprennent un mélangeur comprenant un rotor et un stator permettant de développer un taux de cisaillement compris entre 500s⁻¹ et 2000s⁻¹. D'autres dispositifs de formation ou de piégeage des microbulles peuvent être utilisés tels que la dépressurisation après confinement sous pression, ou des dépôts successifs de couvertures de matière grasse.

Cette incorporation de microbulles de gaz peut se faire après avoir porté la matière grasse à une température comprise entre 30°C et 50°C, préférentiellement entre 40°C et 50°C.

Le procédé selon l'invention est avantageusement suivi d'une étape de cristallisation du produit obtenu. Cette étape peut être une simple étape où la composition est laissée au repos. Cependant des techniques pour orienter la cristallisation et optimiser la taille et l'homogénéité des microcristaux sont avantageusement utilisées. Par exemple le tempérage ou l'ensemencement avec des germes cristallins, particulièrement des microcristaux de type βV (poudre de beurre de cacao Mycryo™) donnent de bien meilleurs résultats.

Alternativement l'étape de cristallisation, ou de pré- cristallisation (tempérage), de la matière grasse peut précéder l'étape d'incorporation des bulles.

Un autre objet de l'invention est un produit alimentaire obtenu par le procédé selon l'invention. L'invention a également pour objet l'utilisation d'un produit alimentaire selon l'invention dans l'industrie alimentaire et particulièrement en biscuiterie, confiserie ou en chocolaterie.

L'invention a également pour objet un beurre de cacao et/ou une composition de chocolat caractérisé en ce qu'il comprend des microbulles de gaz, de taille comprise entre 1 μm et 100 μm, pour limiter l'endommagement de la microstructure, réduire l'exsudation et supprimer le blanchiment gras lors du chauffage entre 20°C et 30°C.

L'invention sera mieux comprise à la lecture des exemples et des figures qui suivent et qui sont fournis à titre d'exemple et ne présentent aucun caractère limitatif. En particulier, l'invention n'est pas limitée aux modes décrits plus haut. Il est notamment possible de l'appliquer aux cas des chocolats fourrés (pralines) ou des biscuits recouverts d'une couche de matière grasse comme le beurre de cacao et d'incorporer des particules d'origine végétales (cacao solide broyé).

### Description des Figures :

- Figure 1 : Photographie du disperseur Ultra-turrax® (A) et images en microscopie électronique à balayage (MEB) d'un beurre de cacao enrichi en microbulles d'air selon l'invention.
- Figure 2 : Images en réflexion de la surface du beurre de cacao solide non enrichi lors du chauffage isotherme à 26,5°C.
- Figure 3 : Images en réflexion de la surface du beurre de cacao non enrichi lors du chauffage isotherme à différentes températures allant de 24.5°C à 30°C.

- Figure 4 : Images en réflexion de la surface du beurre de cacao solide enrichi en microbulles d'air selon l'invention lors de son chauffage isotherme à 27.5°C, 29°C ou 30°C.
- Figure 5 : Temps de stabilisation de la microstructure d'un beurre de cacao enrichi selon l'invention et d'un beurre standard après une perturbation thermique de 30 secondes à 28°C.
- Figure 6 : Représentation schématique du comportement d'un produit alimentaire à base de matière grasse lors du chauffage isotherme et de la fusion des microcristaux de bas point de fusion : effets d'exsudation et de blanchiment gras.
- Figure 7 : Représentation schématique du comportement d'un produit alimentaire à base de matière grasse enrichi en microbulles de gaz lors du chauffage isotherme : élimination des effets d'exsudation et de blanchiment gras.

### Exemple 1 : Exemple comparatif entre un beurre de cacao solide enrichi à 1% d'air et un beurre de cacao non enrichi

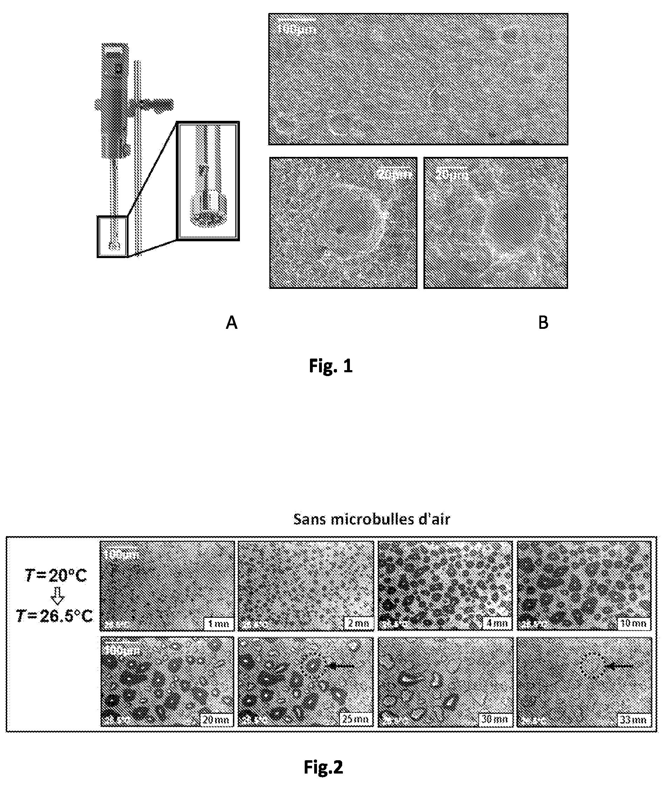

Un produit alimentaire selon l'invention est obtenu par le procédé suivant :
Une masse de 40g de beurre de cacao (beurre standard en provenance de la société Barry Callebaut SA) est porté à 50°C puis enrichi en microbulles d'air. Le procédé d'incorporation de microbulles de gaz dans le beurre de cacao consiste à cisailler violemment le beurre de cacao fondu à 50°C avec un disperseur Ultra-turrax® (IKA T25 Digital puissance utile 350 W) représenté en Figure 1A. La rotation à 6000 tours par minute de l'arbre interne avec un interstice entre rotor et stator de 0.5mm génère un taux de cisaillement suffisant pour incorporer de fines bulles d'air d'un diamètre de quelques dizaines de microns dans le liquide. Dans cet exemple la composition décrite ci-dessus a été soumise à un tel traitement pendant 5 mn.

Lors du refroidissement et de la cristallisation contrôlé de produits enrichis et de produits non enrichis en microbulles d'air (vitesse de refroidissement 5°C/mn) vers la température de 20°C, on ajoute, lorsque la température du mélange liquide atteint 37°C, 0.6 g de poudre Mycryo™ pour orienter la cristallisation du beurre de cacao vers la forme stable βV recherché pendant le refroidissement à 20°C (vitesse de refroidissement 5°C/mn). Les préparations coulées sous forme liquide dans une coupelle de cuivre cristallisent pendant la conservation à 20°C.

La poudre Mycryo™ est une poudre de beurre de cacao obtenue par cryogénisation et commercialisée par la société Barry Callebaut SA. Cette poudre se compose essentiellement de microcristaux de la forme βV. Un ensemencement avec de la poudre Mycryo™ constitue une alternative au tempérage classique du chocolat ou des produits cristallisés à base de beurre de cacao. Les produits enrichis et non enrichis en microbulles d'air sont ensuite conservés à 20°C pendant 4 jours.

Après 4 jours de repos les analyses effectuées en microscopie électronique à balayage (MEB) du produit enrichi indiquent la présence de microbulles d'air de diamètre compris entre 30μm et 60μm dans la matrice solide semi cristalline (Figure 1 B).

La fraction volumique en microbulles de gaz dans le beurre de cacao liquide est estimée par la méthode du flacon. La méthode consiste à remplir un pycnomètre de volume 50ml avec le liquide enrichi en microbulles d'air dans une enceinte thermalisée à 40°C et mesurer la masse du produit non cristallisé. Les pesées des produits enrichis en gaz, dans ce cas de l'air, donnent une fraction volumique en gaz de 1% avec une précision de 10%.

L'effet d'un chauffage isotherme au-dessus de 24°C du beurre de cacao cristallisé obtenu selon le procédé décrit ci-dessus et en l'absence de microbulles d'air est visible sur les représentations de la Figure 2. Le chauffage isotherme à 26.5°C du beurre de cacao cristallisé provoque la formation rapide de petites gouttes liquides à la surface du matériau. Le liquide se retire ensuite lors du chauffage isotherme du produit mais des traces subsistent à la surface du matériau aux endroits anciennement occupés par les gouttes. Ceci est visible sur la Figure 2 où les flèches noires indiquent le retrait d'une goutte après 25mn de chauffage isotherme à 26.5°C et la présence à 33mn de traces à l'endroit anciennement occupé par la goutte sur la surface du matériau. Une telle dégradation de la surface et de la brillance du produit est caractéristique du phénomène de blanchiment gras des matériaux solides à base de beurre de cacao.

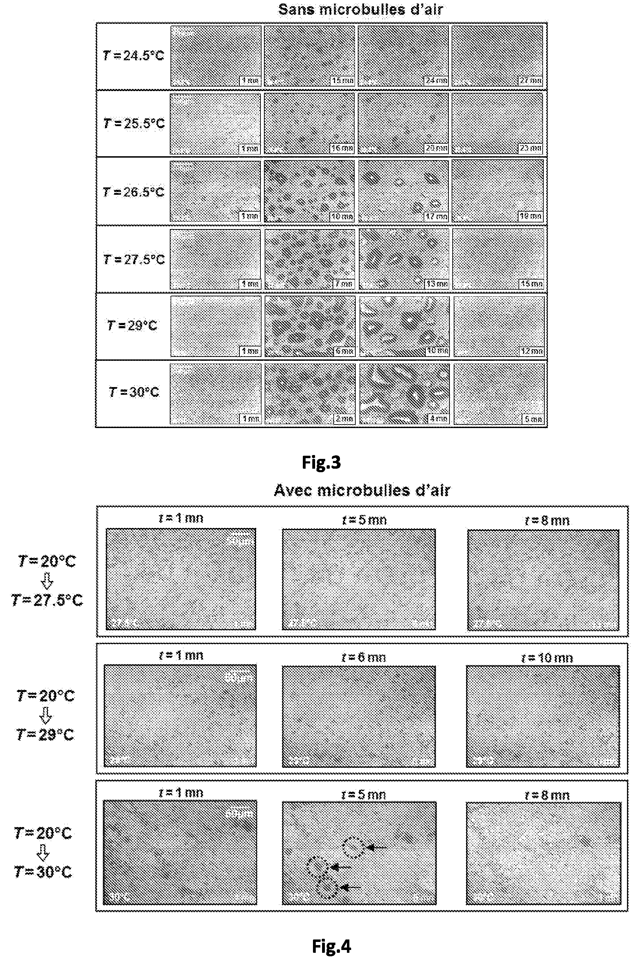

L'ampleur du phénomène d'exsudation et de blanchiment gras à la surface d'un tel beurre de cacao solide augmente avec la température de chauffage isotherme du matériau entre 24°C et 30°C. Ceci est apparent sur les représentations de la Figure 3 où la taille des gouttes et de leurs traces augmentent avec la température. Les gouttes et les traces présentent une taille d'environ 100μm lors du chauffage à 30°C. Une fonte massive du beurre de cacao se produit au-dessus de 31 °C.

La présence de microbulles d'air dans le matériau cristallisé accroît considérablement la température critique de migration des huiles vers la surface lors du chauffage isotherme du beurre de cacao (Figure 4). Des petites gouttes de diamètre 20μm apparaissent seulement lors du chauffage à 30°C du matériau enrichi en microbulles d'air (Figure 4) alors que le matériau sans microbulles de gaz exsude fortement au-dessus de 26°C (Figure 3). Les microbulles d'air contribuent à supprimer le phénomène d'exsudation lors du chauffage entre 25°C et 30°C ainsi que le blanchiment gras à la surface du matériau suite à la recristallisation des triglycérides.

La Figure 4 représente des photographies en réflexion de la surface du beurre de cacao solide enrichi en microbulles d'air lors du chauffage isotherme à 27,5°C, 29°C ou 30°C. Les cercles en pointillés indiquent la formation de très rares microgouttes liquides de diamètre environ 20μm lors du chauffage isotherme à 30°C du matériau puis un retrait rapide du liquide sur un laps de temps de quelques minutes. Ceci résulte en une absence de blanchiment gras visible après le retrait des gouttes.

### Exemple 2 : Influence de microbulles d'air à 1% sur la stabilité du beurre de cacao solide lors du chauffage du produit entre 20°C et 30°C.

Les expériences de diffusion multiple de la lumière permettent de juger de la stabilité de la microstructure lors du chauffage transitoire du matériau. Le protocole consiste à chauffer pendant 30 secondes le matériau puis le refroidir à 20°C pour analyser la stabilité de la microstructure. Les fluctuations temporelles de la figure de speckle renseignent sur la dynamique des déplacements des microcristaux à l'échelle de quelques nanomètres et permettent de déduire les évolutions temporelles du temps caractéristique de stabilisation τᵥ de la microstructure suite au chauffage transitoire du produit.

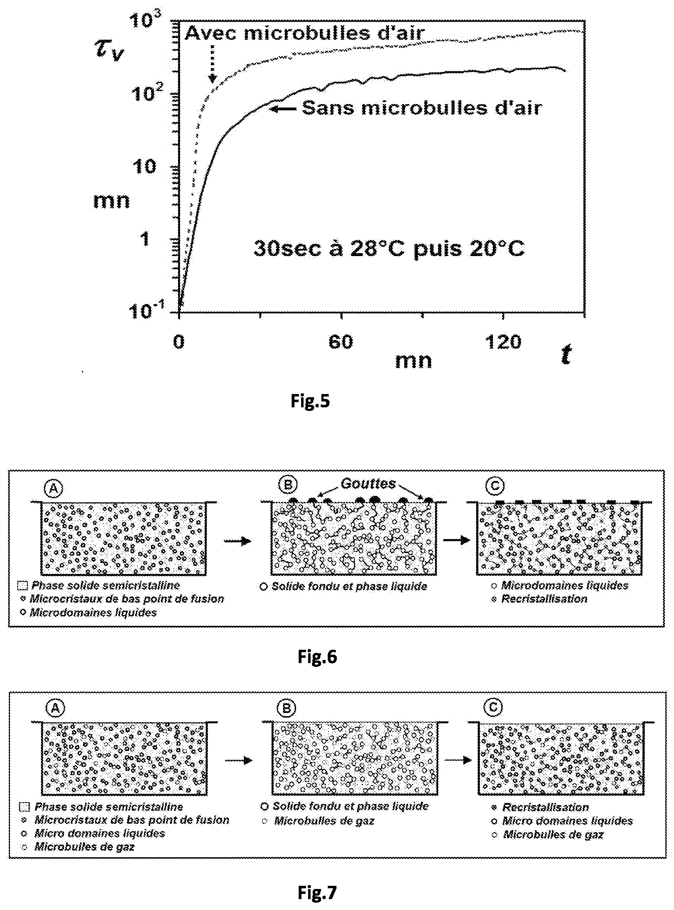

Un beurre de cacao standard non enrichi et enrichi obtenu selon le procédé décrit à l'exemple 1 est donc chauffé 30 secondes à 28°C puis refroidi à 20°C. La visualisation par imagerie de la figure de speckle et l'analyse résolue en temps des fluctuations des grains de speckle permettent de déduire les variations du temps de stabilisation τᵥ de la microstructure avec le temps d'expérience *t* à 20°C après une perturbation thermique de 30 secondes à 28°C (Figure 5).

Les matrices de corrélation des fluctuations de la figure de speckle indiquent une déstabilisation de la matrice solide semi cristalline après le chauffage à 28°C pendant 30 secondes du beurre de cacao. Le chauffage transitoire du beurre de cacao non enrichi en microbulles d'air perturbe la microstructure sur une échelle de temps de l'ordre de 30 minutes. En revanche, la microstructure du matériau enrichi en microbulles d'air se stabilise beaucoup plus rapidement dans un temps de l'ordre de la dizaine de minutes après le refroidissement à 20°C du matériau. Un enrichissement en bulles d'air accélère ainsi la stabilisation de la microstructure.

De manière générale d'autres observations et expériences indiquent que la présence de microbulles d'air diminue l'endommagement à grande échelle du matériau et les effets d'exsudation sous l'action d'une perturbation thermique notamment en limitant la formation de pores partiellement connexes susceptibles de drainer le liquide en surpression vers la surface du matériau.

### Proposition d'explication des phénomènes observés

Sans vouloir être limité par ces explications, données à titre indicatif, il est proposé un mécanisme d'action expliquant les phénomènes observés. Lors du chauffage du matériau, la dilatation thermique du liquide et/ou la fusion partielle des microcristaux induisent une surpression du fluide dans les microdomaines liquides et l'ouverture de microfissures métastables dans les défauts de la matrice semi cristalline hétérogène. La percolation des micro-domaines liquides par endommagement du matériau solide crée des amas qui peuvent alors crever la surface et drainer le fluide en excès sous la forme de gouttes superficielles. A plus long terme, la recristallisation du solide fondu provoque le retrait des gouttes et la consolidation du matériau mais contribue au phénomène de blanchiment gras et donc à la dégradation de la brillance du matériau. Les schémas de la Figure 6 représentent les étapes suivantes conduisant à une exsudation et au blanchiment gras du produit constitué par :
- des microcristaux de bas point de fusion et des micro-domaines liquides dans une matrice solide semi cristalline à température ambiante (A),
- la fusion partielle du solide et la percolation des microdomaines liquides provoquent une exsudation lors du chauffage du matériau (B) ; et
- la recristallisation et le retrait des gouttes en régime isotherme donnent lieu au phénomène de blanchiment gras (C).

Dans un produit alimentaire selon l'invention, les microbulles de gaz absorbent les surpressions associées à la dilatation du liquide et à la fusion partielle de la phase solide lors du chauffage du matériau ce qui atténue considérablement la propagation des microfissures et l'endommagement de la microstructure. Un enrichissement du matériau en microbulles d'air contribue ainsi à la relaxation des contraintes internes lors du chauffage du matériau avec pour conséquence une limitation de la taille des amas de percolation de micro-domaines liquides et une absence d'exsudation en dessous de 30°C. Le moindre endommagement de la microstructure et la moindre exsudation du matériau à base de beurre de cacao enrichi en microbulles de gaz se traduisent alors par la stabilisation plus rapide de la microstructure et la suppression des effets de blanchiment gras lorsque le matériau est soumis à des variations de température comprises entre 20°C et 30°C. Les schémas de la Figure 7 représentent les étapes limitant les effets d'exsudation et le blanchiment gras dans un produit alimentaire constitué par :
- des microcristaux de bas point de fusion, des micro-domaines liquides et des microbulles de gaz dans une matrice solide semi cristalline à température ambiante (A),
- la fusion partielle du solide et la relaxation de la surpression interne dans la phase liquide limitent les effets d'exsudation lors du chauffage du matériau (B) ; et
- réduisent le blanchiment gras en surface après la recristallisation des corps gras en régime isotherme (C).

Les microbulles d'air accroissent ainsi la capacité de la microstructure à subir des déformations locales sans endommagement à grande échelle lors du chauffage du matériau à base de beurre de cacao. La nature du gaz influe assez peu sur le phénomène dans la mesure où seule la forte compressibilité du gaz permet la relaxation de la surpression dans les microdomaines liquides lors du chauffage du produit alimentaire à base de matière grasse. Avantageusement, une distribution homogène des microbulles dans la matrice solide améliore leur efficacité lors du chauffage du produit.

L'invention n'est pas limitée aux modes de réalisations présentées et d'autres modes de réalisation apparaîtront clairement à l'homme du métier.

## Revendications

1. Produit alimentaire à base de matière grasse sous la forme de micro-domaines cristallins et non cristallins, **caractérisé en ce que** ledit produit comprend une fraction volumique de 0,1% à 4,5% de microbulles de gaz de diamètre allant de 1 μm à 100 μm.

2. Produit alimentaire selon la revendication 1, dans lequel la matière grasse est une matière grasse végétale.

3. Produit alimentaire selon la revendication 1 ou la revendication 2, dans lequel la matière grasse comprend du beurre de cacao, une graisse végétale non laurique, une graisse à base de beurre de karité, de la matière grasse de lait anhydre ou un mélange de ces matières grasses.

4. Produit alimentaire selon l'une quelconque des revendications 1 à 3, dans lequel la quantité de matière grasse est comprise entre 25% et 100% en poids.

5. Produit alimentaire selon l'une quelconque des revendications 1 à 4, dans lequel le diamètre des microbulles de gaz est de 1 μm à 30 μm.

6. Produit alimentaire selon l'une quelconque des revendications 1 à 4, dans lequel le diamètre des microbulles de gaz est de 1 μm à 10 μm.

7. Produit alimentaire selon l'une quelconque des revendications 1 à 6, ledit produit ayant une densité supérieure à 1,25g/ml.

8. Produit alimentaire selon l'une quelconque des revendications 1 à 7, ladite fraction volumique de microbulles allant de 0,5 à 2%.

9. Produit alimentaire selon l'une quelconque des revendications 1 à 8, ledit produit étant un chocolat.

10. Procédé de préparation d'un produit alimentaire à base de matière grasse sous la forme de micro-domaines cristallins et non cristallins, dans lequel on forme une composition liquide ou visqueuse comprenant la matière grasse, **caractérisé en ce qu'**on disperse dans ladite composition une fraction volumique de 0,1 % à 4,5 %, de préférence de 0,5 % à 2 %, de microbulles de gaz de diamètre allant de 1 μm à 100 μm.

11. Procédé selon la revendication 10, dans lequel les microbulles sont dispersées dans la matière grasse par une agitation mécanique qui comprend des mouvements de cisaillement.

12. Procédé selon la revendication 10 ou la revendication 11, dans lequel la dispersion s'effectue à une température allant 30°C à 50°C, préférablement de 40°C à 50°C.

13. Procédé selon l'une quelconque des revendications 10 à 12, dans lequel l'étape de dispersion est suivie de, ou est précédé par, une étape de cristallisation de la matière grasse.

14. Procédé selon l'une quelconque des revendications 10 à 13, dans lequel le produit alimentaire est du chocolat, ou un produit comprenant du beurre de cacao.

15. Utilisation d'un produit alimentaire selon l'une quelconque des revendications 1 à 9, ou obtenu selon un procédé selon l'une quelconque des revendications 10 à 14, en biscuiterie, en pâtisserie, en confiserie ou en chocolaterie.

## Patentansprüche

1. Lebensmittelprodukt auf der Basis von Fettsubstanz in Form von kristallinen und nicht-kristallinen Mikrodomänen, **dadurch gekennzeichnet, dass** das Produkt eine Volumenfraktion von 0,1% bis 4,5% an Gasmikrobläschen mit einem Durchmesser von 1 μm bis 100 μm umfasst.

2. Lebensmittelprodukt nach Anspruch 1, wobei die Fettsubstanz eine pflanzliche Fettsubstanz ist.

3. Lebensmittelprodukt nach Anspruch 1 oder Anspruch 2, wobei die Fettsubstanz Kakaobutter, ein pflanzliches Nicht-Laurinsäure-Fett, ein Fett auf der Basis von Karitebutter, wasserfreie Milchfettsubstanz oder ein Gemisch dieser Fettsubstanzen umfasst.

4. Lebensmittelprodukt nach einem der Ansprüche 1 bis 3, wobei die Menge an Fettsubstanz zwischen 25 und 100 Gew.-% beträgt.

5. Lebensmittelprodukt nach einem der Ansprüche 1 bis 4, wobei der Durchmesser der Gasmikrobläschen von 1 μm bis 30 µm reicht.

6. Lebensmittelprodukt nach einem der Ansprüche 1 bis 4, wobei der Durchmesser der Gasmikrobläschen von 1 µm bis 10 µm reicht.

7. Lebensmittelprodukt nach einem der Ansprüche 1 bis 6, wobei das Produkt eine Dichte über 1,25 g/ml hat.

8. Lebensmittelprodukt nach einem der Ansprüche 1 bis 7, wobei die Volumenfraktion an Mikrobläschen von 0,5 bis 2% beträgt.

9. Lebensmittelprodukt nach einem der Ansprüche 1 bis 8, wobei es sich bei dem Produkt um eine Schokolade handelt.

10. Verfahren zur Herstellung eines Lebensmittelprodukts auf der Basis von Fettsubstanz in Form von kristallinen und nicht-kristallinen Mikrodomänen, wobei man eine die Fettsubstanz umfassende flüssige oder viskose Zusammensetzung herstellt, **dadurch gekennzeichnet, dass** man in dieser Zusammensetzung eine Volumenfraktion von 0,1% bis 4,5%, vorzugsweise von 0,5% bis 2%, an Gasmikrobläschen mit einem Durchmesser von 1 µm bis 100 µm dispergiert.

11. Verfahren nach Anspruch 10, wobei die Mikrobläschen in der Fettsubstanz durch mechanisches Rühren dispergiert werden, das Scherbewegungen umfasst.

12. Verfahren nach Anspruch 10 oder Anspruch 11, wobei das Dispergieren bei einer Temperatur von 30°C bis 50°C, vorzugsweise von 40°C bis 50°C, durchgeführt wird.

13. Verfahren nach einem der Ansprüche 10 bis 12, wobei ein Schritt der Kristallisation der Fettsubstanz auf den Dispergierschritt folgt oder dem Dispergierschritt vorausgeht.

14. Verfahren nach einem der Ansprüche 10 bis 13, wobei es sich bei dem Lebensmittelprodukt um Schokolade oder ein Kakaobutter umfassendes Produkt handelt.

15. Verwendung eines Lebensmittelprodukts nach einem der Ansprüche 1 bis 9 oder erhalten gemäß einem Verfahren nach einem der Ansprüche 10 bis 14 in der Keksherstellung, der Konditorei, der Süßwarenherstellung oder der Schokoladenherstellung.

## Claims

1. Food product based on fat in the form of crystalline and non-crystalline microdomains, **characterized in that** said product comprises a volume fraction of from 0.1% to 4.5% of gas microbubbles having a diameter ranging from 1 μm to 100 μm.

2. Food product according to Claim 1, in which the fat is a vegetable fat.

3. Food product according to Claim 1 or Claim 2, in which the fat comprises cocoa butter, a non-lauric vegetable fat, a fat based on shea butter, anhydrous milk fat or a mixture of these fats.

4. Food product according to any one of Claims 1 to 3, in which the amount of fat is between 25% and 100% by weight.

5. Food product according to any one of Claims 1 to 4, in which the diameter of the gas microbubbles is from 1 µm to 30 µm.

6. Food product according to any one of Claims 1 to 4, in which the diameter of the gas microbubbles is from 1 µm to 10 µm.

7. Food product according to any one of Claims 1 to 6, said product having a density of greater than 1.25 g/ml.

8. Food product according to any one of Claims 1 to 7, said volume fraction of microbubbles ranging from 0.5% to 2%.

9. Food product according to any one of Claims 1 to 8, said product being a chocolate.

10. Process for preparing a food product based on fat in the form of crystalline and non-crystalline microdomains, in which a liquid or viscous composition comprising the fat is formed, **characterized in that** a volume fraction of from 0.1% to 4.5%, preferably from 0.5% to 2%, of gas microbubbles having a diameter ranging from 1 µm to 100 µm is dispersed in said composition.

11. Process according to Claim 10, in which the microbubbles are dispersed in the fat by mechanical stirring which comprises shearing movements.

12. Process according to Claim 10 or Claim 11, in which the dispersion is carried out at a temperature ranging from 30°C to 50°C, preferably from 40°C to 50°C.

13. Process according to any one of Claims 10 to 12, in which the dispersion step is followed by, or is preceded by, a fat crystallization step.

14. Process according to any one of Claims 10 to 13, in which the food product is chocolate, or a product comprising cocoa butter.

15. Use of a food product according to any one of Claims 1 to 9, or obtained according to a process according to any one of Claims 10 to 14, in biscuit manufacturing, in cake manufacturing, in confectionery manufacturing or in chocolate manufacturing.
